# EUROPEAN PATENT APPLICATION

(11) **EP 4 679 788 A1**
(43) Date of publication of application: **14.01.2026**
(21) Application number: 23926368.4
(22) Date of filing: 30.06.2023
(51) Int. Cl.: H04L 41/0806, H04L 45/247

(54) **INFORMATION PROVISION DEVICE, INFORMATION PROVISION METHOD, INFORMATION PROVISION PROGRAM, AND INFORMATION PROVISION SYSTEM**

(30) Priority: 03.03.2023 JP 2023033235
(71) Applicant: NTT Docomo Business, Inc., Tokyo 100-8019 (JP)
(72) Inventor: HORIGOMI, Ryohei, Tokyo 100-8019 (JP); OZAWA, Yojiro, Tokyo 100-8019 (JP); SHIMURA, Yuko, Tokyo 100-8019 (JP)
(74) Representative: Hoffmann Eitle
(86) International application number: PCT/JP2023/024525
(87) International publication number: WO 2024/185159

(57) **Abstract**

A configuration server (30) includes a generation unit (331) and a provision unit (332). The generation unit (331) generates setting information for making a setting of CPE in accordance with a notification from the CPE installed in a site of a user. The provision unit (332) transmits the setting information to the CPE via a first communication network (e.g., fixed communication network). When the transmission of the setting information via the first communication network fails, the provision unit (332) transmits the setting information to the CPE via a second communication network (e.g., mobile communication network).

## Description

### [Technical Field]

The present invention relates to an information providing device, an information providing method, an information providing program, and an information providing system.

### [Background Art]

There have been known techniques called zero touch provisioning (e.g., see Non Patent Literature 1). In the techniques, when a router delivered to a site of a user who receives communication service is connected to a predetermined line, necessary data is automatically acquired to perform setup.

### [Citation List]

### [Non Patent Citation]

Non Patent Literature 1: NTT EAST, provision of "introduction menu" for taking care of functional design and setting of "Managed SD-WAN", [online], [searched on February 24, 2023], Internet (https://cloud.watch.impress.co.jp/docs/news/1425899.html)

### [Summary of Invention]

### [Technical Problem]

However, related techniques have such a problem that automatic setup may fail to be normally executed.

For example, in the technique described in Non Patent Literature 1, when a line to which a router is connected cannot be used due to a failure, automatic setup is not performed normally.

### [Solution to Problem]

In order to solve the above-described problems and achieve the object, an information providing device includes: a generation unit configured to generate setting information for making a setting for a communication control device installed in a site of a user in accordance with a notification from the communication control device; and a provision unit configured to transmit the setting information to the communication control device via a first communication network, and, when transmission of the setting information via the first communication network fails, transmit the setting information to the communication control device via a second communication network.

### [Advantageous Effects of Invention]

According to the present invention, automatic setup can be normally executed.

### [Brief Description of Drawings]

FIG. 1 illustrates a configuration of an entire network.
FIG. 2 illustrates a configuration example of customer premises equipment (CPE).
FIG. 3 illustrates a configuration example of a configuration server.
FIG. 4 is a flowchart illustrating a flow of processing of the CPE.
FIG. 5 is a flowchart illustrating a flow of processing of the configuration server.
FIG. 6 illustrates a configuration example of a computer that executes a communication control program.
FIG. 7 illustrates a configuration of a network of a software-defined-wide area network (SD-WAN).

### [Embodiments for Carrying Out the Invention]

An embodiment of an information providing device, an information providing method, an information providing program, and an information providing system according to the present application will be described in detail below with reference to the drawings. Note that the present invention is not limited to the embodiment described below.

### [First Embodiment]

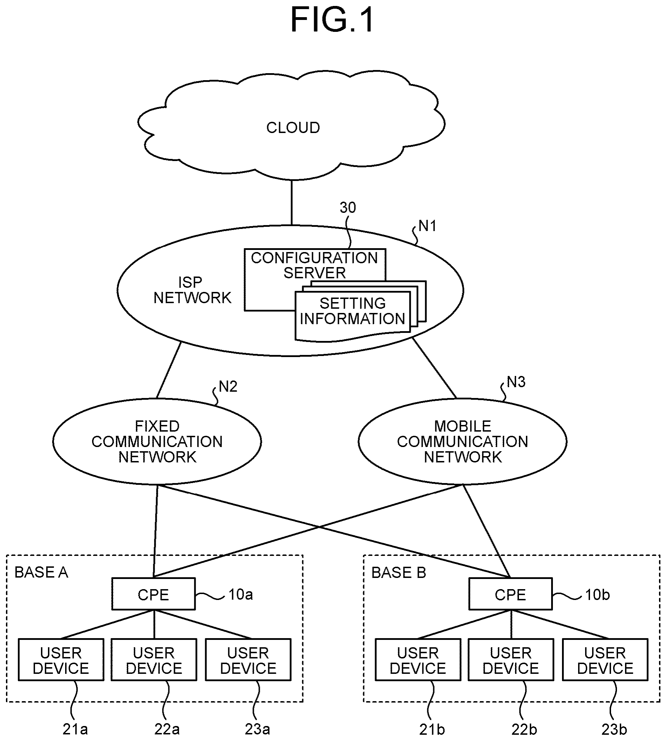

First, a configuration of an entire network including a communication control device will be described with reference to FIG. 1. FIG. 1 illustrates the configuration of the entire network. Furthermore, the network in FIG. 1 is an example of an information providing system.

As illustrated in FIG. 1, the network includes an Internet service provider (ISP) network N1, a fixed communication network N2, and a mobile communication network N3. The fixed communication network N2 and the mobile communication network N3 are connected to the ISP network N1.

The ISP network N1 is provided by an ISP. For example, the ISP provides connection service by using the ISP network N1. According to the connection service, a user device of a user can access an external network such as a cloud.

The fixed communication network N2 is provided by a line provider. The fixed communication network N2 is a wired communication network using an optical fiber cable and the like. The line provider can provide an optical line using the fixed communication network N2.

The mobile communication network N3 is provided by a line provider. The mobile communication network N3 is a wireless communication network using radio waves. The line provider can provide a wireless communication line such as 5G, 4G, and long term evolution (LTE) by using the mobile communication network N3.

Furthermore, customer premises equipment (CPE) is arranged at each site of a user. One or more user devices are connected to the CPE. Note that the CPE is an example of the communication control device. In each base, the CPE constitutes a user network.

In an example of FIG. 1, CPE 10a is arranged in a base A. A user device 21a, a user device 22a, and a user device 23a are connected to the CPE 10a. Furthermore, CPE 10b is arranged in a base B. A user device 21b, a user device 22b, and a user device 23b are connected to the CPE 10b.

In the following description, the CPE 10a and the CPE 10b may be referred to as pieces of CPE 10 without distinction. The CPE 10 is connected to both the fixed communication network N2 and the mobile communication network N3. Note that the number of pieces of CPE included in the network and the number of user devices connected to CPE are not limited to those illustrated in the figure.

Examples of a user device connected to the CPE 10 include a personal computer, a tablet user device, and a smartphone. The user device connected to the CPE 10 may be an IoT device such as a multifunction machine, a wearable user device, and a sensor. The CPE 10 and the user device are connected by wire or wirelessly.

Furthermore, a configuration server 30 provides setting information to the CPE 10. The CPE 10 can perform setup of the CPE 10 itself by using the provided setting information. The configuration server 30 is arranged in the ISP network N1. The position where the configuration server 30 is arranged is not limited to the illustrated position. The configuration server 30 is an example of the information providing device.

Here, the CPE 10 is first delivered to a site of a user who receives communication service such as a VPN and a closed network. In the case, some of setting items of the CPE 10 are not set. Therefore, the user cannot receive the communication service in the base at the time. For example, in the CPE 10 at the time, a setting common to the user has been made, and kitting is not preliminarily made.

In order to receive the communication service in the base, an unset setting item of the CPE 10 needs to be normally set.

The CPE 10 and the configuration server 30 of the embodiment have a zero touch provisioning function. That is, the setting information is automatically provided from the configuration server 30 to the CPE 10. The CPE 10 automatically sets an unset setting item based on the setting information.

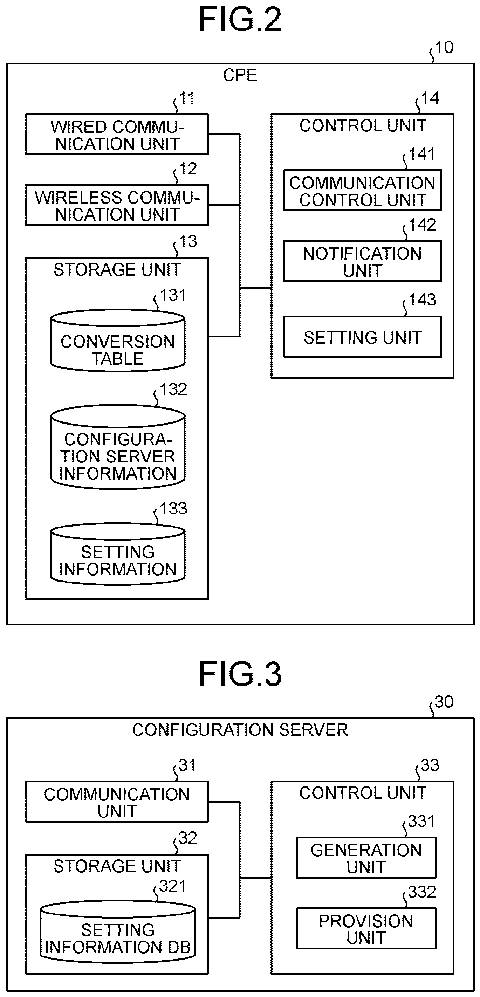

FIG. 2 illustrates a configuration example of the CPE. As illustrated in FIG. 2, the CPE 10 includes a wired communication unit 11, a wireless communication unit 12, a storage unit 13, and a control unit 14. The CPE 10 houses a user device. In the example of FIG. 1, the CPE 10a houses the user device 21a, the user device 22a, and the user device 23a. In the following description, the "user device" means a user device housed in the CPE 10.

The wired communication unit 11 is a module for performing wired communication. The wired communication unit 11 has a plurality of Ethernet (registered trademark) ports. Each of the Ethernet ports is connected to a user device or a terminal device (e.g., optical network unit (ONU)) on the side of the fixed communication network N2. Note that the wired communication unit 11 may include a function as an ONU.

The wireless communication unit 12 is a module for performing wireless communication. The wireless communication unit 12 includes an antenna for transmitting and receiving radio waves. The wireless communication unit 12 performs wireless communication with a base station of the mobile communication network N3. Furthermore, the wireless communication unit 12 performs wireless communication with a user device wirelessly connected to the CPE 10.

The CPE 10 functions as a router. This enables the CPE 10 to relay communication between the housed user device and an external network. The wired communication unit 11 relays communication between the housed user device and the fixed communication network N2. Furthermore, the wireless communication unit 12 relays communication between the user device and the mobile communication network N3.

Note that which of the fixed communication network N2 and the mobile communication network N3 the user device communicates with is irrelevant to whether the user device is connected to the CPE 10 by wire or wirelessly.

The user device connected by wire to the CPE 10 by the wired communication unit 11 may communicate with the fixed communication network N2 via the wired communication unit 11, or may communicate with the mobile communication network N3 via the wireless communication unit 12. Furthermore, the user device connected wirelessly to the CPE 10 by the wireless communication unit 12 may communicate with the fixed communication network N2 via the wired communication unit 11, or may communicate with the mobile communication network N3 via the wireless communication unit 12.

The storage unit 13 is a storage device such as a hard disk drive (HDD), a solid state drive (SSD), and an optical disk. Note that the storage unit 13 may be a data rewritable semiconductor memory such as a random access memory (RAM), a flash memory, and a non volatile static random access memory (NVSRAM).

The storage unit 13 stores an operating system (OS) and various programs executed by the CPE 10. The storage unit 13 stores a conversion table 131, configuration server information 132, and setting information 133.

The conversion table 131 is used for performing address conversion between a user device connected to the CPE 10 and a device outside the base. The conversion table 131 is a network address translation (NAT) table or a network address port translation (NAPT) table.

The configuration server information 132 is used for connection to the configuration server 30. For example, the configuration server information 132 is a fully qualified domain name (FQDN) or an IP address of the configuration server 30. Furthermore, the configuration server information 132 includes identification information of the CPE 10 itself.

The setting information 133 is a value for each setting item of the CPE 10. In an initial state, values of some setting items included in the setting information 133 are not set. Here, it is assumed that route information is not set. The route information is a setting item necessary for the CPE 10 to function as a router.

The control unit 14 controls the entire CPE 10. The control unit 14 includes, for example, an electronic circuit and an integrated circuit. The electronic circuit includes a central processing unit (CPU), a micro processing unit (MPU), and a graphics processing unit (GPU). The integrated circuit includes an application specific integrated circuit (ASIC) and a field programmable gate array (FPGA).

Furthermore, the control unit 14 includes an internal memory for storing a program defining various processing procedures and control data, and executes each piece of processing by using the internal memory. Furthermore, the control unit 14 functions as various processing units by various programs operating. For example, the control unit 14 includes a communication control unit 141, a notification unit 142, and a setting unit 143.

The communication control unit 141 controls the wired communication unit 11 and the wireless communication unit 12 to cause the user device to execute communication. For example, the communication control unit 141 transmits a packet transmitted from the user device to the fixed communication network N2 or the mobile communication network N3.

The notification unit 142 notifies the configuration server 30 of information for identifying the CPE 10. For example, the notification unit 142 make notification to an IP address dispensed from the fixed communication network N2 or the mobile communication network N3. Note that the IP address dispensed from the fixed communication network N2 or the mobile communication network N3 may be an IP address of the configuration server 30 or an IP address of another server. Furthermore, the notification unit 142 makes notification at the timing when the CPE 10 is powered on.

The setting unit 143 makes a setting of the CPE 10 in accordance with the setting information provided from the configuration server 30.

When receiving POST from the configuration server 30 via a preliminarily prepared setting input application programming interface (API), the setting unit 143 compares Running-Config of the CPE 10 with the setting information indicated in the received POST, and applies the difference therebetween to the setting of the CPE 10. For example, the setting unit 143 writes the route information indicated in the setting information received from the configuration server 30 in the setting information 133.

Furthermore, when the application of the setting fails or when it is determined that connection with the configuration server 30 is lost, the setting unit 143 waits for a certain period of time, autonomously discards the setting, and rolls back the CPE 10.

FIG. 3 illustrates a configuration example of the configuration server. As illustrated in FIG. 3, the configuration server 30 includes a communication unit 31, a storage unit 32, and a control unit 33.

The communication unit 31 communicates with other devices. The communication unit 31 is, for example, a network interface card (NIC).

The storage unit 32 is a storage device such as an HDD, an SSD, and an optical disk. Note that the storage unit 32 may be a data rewritable semiconductor memory such as a RAM, a flash memory, and an NVSRAM.

The storage unit 32 stores an OS and various programs executed by the configuration server 30. The storage unit 32 stores a setting information DB 321.

The setting information DB 321 is provided to the CPE 10. The setting information DB 321 includes, for example, information input by the user in a service use application procedure or automatically generated information.

The control unit 33 controls the entire configuration server 30. The control unit 33 is, for example, an electronic circuit, such as a CPU, an MPU, and a GPU, or an integrated circuit, such as an ASIC and an FPGA.

Furthermore, the control unit 33 includes an internal memory for storing a program defining various processing procedures and control data, and executes each piece of processing by using the internal memory. Furthermore, the control unit 33 functions as various processing units by various programs operating. The control unit 33 includes a generation unit 331 and a provision unit 332.

The generation unit 331 generates setting information for making a setting of the CPE 10 in accordance with a notification from the CPE 10 installed in the site of the user.

The generation unit 331 detects that the CPE 10 is powered on by receiving a notification from the CPE 10. Then, the generation unit 331 generates the setting information with reference to the setting information DB 321.

The provision unit 332 transmits the setting information to the CPE 10 via the fixed communication network N2. When the transmission of the setting information via the fixed communication network N2 fails, the provision unit 332 transmits the setting information to the CPE 10 via the mobile communication network N3.

Note that the provision unit 332 may first transmit the setting information via the mobile communication network N3. When the transmission fails, the provision unit 332 may transmit the setting information via the fixed communication network N2. The provision unit 332 first attempts transmission via a communication network preset as a priority side among the fixed communication network N2 and the mobile communication network N3.

The provision unit 332 attempts POST including setting information to the API to an interface that supports the communication network set as the priority side among the fixed communication network N2 and the mobile communication network N3. Then, when POST fails, the provision unit 332 attempts POST including setting information to the API to the interface that supports the communication network on the side different from the priority side.

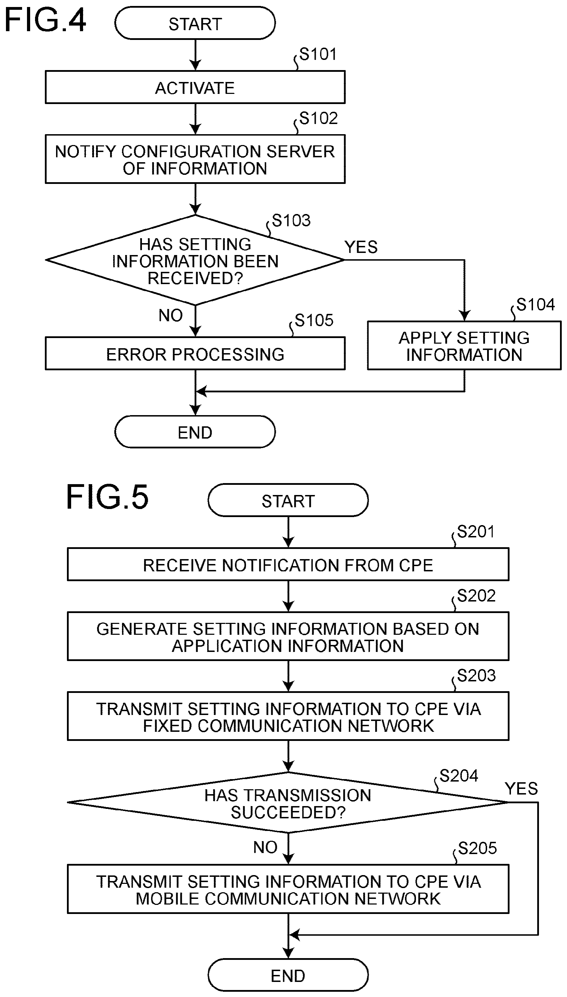

A flow of processing of the CPE will be described with reference to FIG. 4. FIG. 4 is a flowchart illustrating the flow of processing of the CPE.

As illustrated in FIG. 4, when the CPE 10 is activated (Step S101), the notification unit 142 notifies the configuration server of information (Step S102).

Thereafter, when the setting information has been successfully received (Step S103, Yes), the CPE 10 applies the received setting information to the setting of the CPE 10 (Step S104). When the setting information has not been successfully received (Step S103, No), the CPE 10 performs error processing (e.g., rollback) (Step S105).

A flow of processing of the configuration server will be described with reference to FIG. 5. FIG. 5 is a flowchart illustrating the flow of processing of the configuration server.

As illustrated in FIG. 5, first, when receiving the setting information from the CPE 10 (Step S201), the configuration server 30 generates setting information based on application information stored in the setting information DB 321 (Step S202).

Next, the configuration server 30 transmits the setting information to the CPE 10 via the fixed communication network N2 (Step S203).

When the transmission of the setting information succeeds (Step S204, Yes), the configuration server 30 ends the processing. When the transmission of the setting information has failed (Step S204, No), the configuration server 30 transmits the setting information to the CPE 10 via the mobile communication network N3 (Step S205).

Note that the fixed communication network in Step S203 and the mobile communication network in Step S205 in FIG. 5 may be exchanged. That is, the configuration server 30 transmits the setting information to the CPE 10 via the mobile communication network N3. When the transmission of the setting information via the mobile communication network N3 fails, the configuration server 30 can transmit the setting information to the CPE 10 via the fixed communication network N2.

### [Effects of First Embodiment]

As described above, the configuration server 30 includes the generation unit 331 and the provision unit 332. The generation unit 331 generates setting information for making a setting of the CPE 10 in accordance with a notification from the CPE 10 installed in the site of the user. The provision unit 332 transmits the setting information to the CPE 10 via a first communication network (e.g., fixed communication network N2). When the transmission of the setting information via the first communication network fails, the provision unit 332 transmits the setting information to the CPE 10 via a second communication network (e.g., mobile communication network N3). This enables the configuration server 30 to normally execute automatic setup through zero touch provisioning even when one communication network (e.g., fixed communication network N2) cannot be used due to a failure or the like.

### [System Configuration and Like]

Furthermore, each component of each illustrated device is functionally conceptual, and is not necessarily required to be physically configured as illustrated in the drawings. That is, a specific form of distribution and integration of each device is not limited to the illustrated form, and all or a part thereof can be functionally or physically distributed or integrated in any unit in accordance with various loads, usage conditions, and the like. Moreover, all or any part of each processing function of each device can be implemented by a CPU or a program analyzed and executed by the CPU, or can be implemented as hardware using wired logic. Note that the program may be executed not only by the CPU but by another processor such as a GPU.

Furthermore, all or a part of the processing described as being automatically performed among pieces of processing described in the embodiment can be manually performed. Alternatively, all or a part of the processing described as being manually performed can be automatically performed by a known method. In addition, the processing procedure, the control procedure, the specific names, and the information including various pieces of data and parameters illustrated in the specification and the drawings can be changed in any way unless otherwise specified.

### [Program]

In one embodiment, the CPE 10 can be implemented by installing, in a desired computer, a communication control program for executing the above-described information processing as package software or online software. For example, an information processing device can be caused to function as the CPE 10 by causing the information processing device to execute the above-described communication control program. The information processing device mentioned here includes a desktop or notebook personal computer. In addition, examples of the information processing device include a tablet user device, a smartphone, a mobile communication user device such as a mobile phone and a personal handyphone system (PHS), and a slate user device such as a personal digital assistant (PDA).

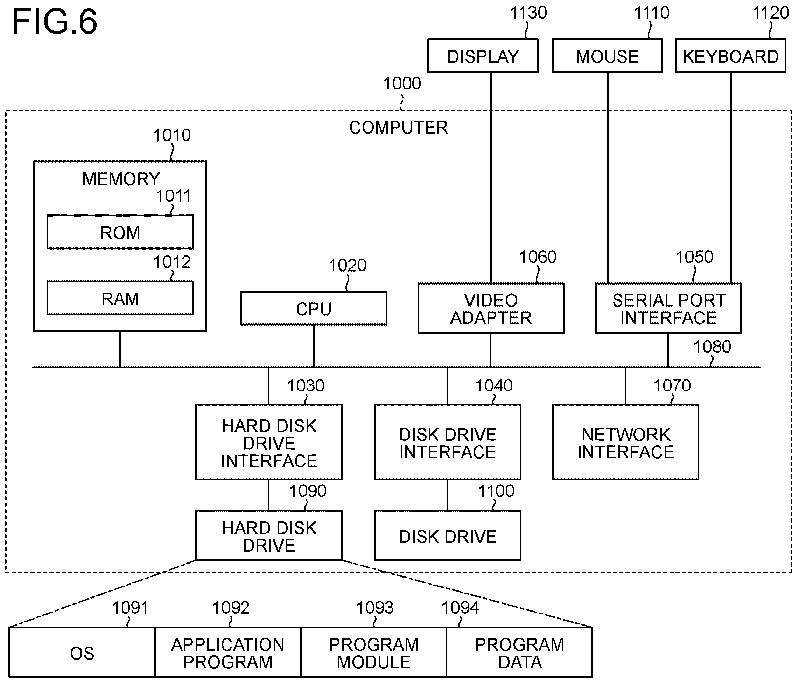

FIG. 6 illustrates a configuration example of a computer that executes a communication control program. A computer 1000 includes, for example, a memory 1010 and a CPU 1020. Furthermore, the computer 1000 includes a hard disk drive interface 1030, a disk drive interface 1040, a serial port interface 1050, a video adapter 1060, and a network interface 1070. These units are connected by a bus 1080.

The memory 1010 includes a read only memory (ROM) 1011 and a random access memory (RAM) 1012. The ROM 1011 stores, for example, a boot program such as a basic input output system (BIOS). The hard disk drive interface 1030 is connected to a hard disk drive 1090. The disk drive interface 1040 is connected to a disk drive 1100. For example, a removable storage medium such as a magnetic disk and an optical disk is inserted into the disk drive 1100. The serial port interface 1050 is connected to, for example, a mouse 1110 and a keyboard 1120. The video adapter 1060 is connected to, for example, a display 1130.

The hard disk drive 1090 stores, for example, an operating system (OS) 1091, an application program 1092, a program module 1093, and program data 1094. That is, a program defining each piece of processing of the CPE 10 is implemented as the program module 1093 in which a computer executable code is written. The program module 1093 is stored in, for example, the hard disk drive 1090. For example, the program module 1093 for executing processing similar to the functional configuration in the CPE 10 is stored in the hard disk drive 1090. Note that the hard disk drive 1090 may be replaced with a solid state drive (SSD) .

Furthermore, setting data used in the processing of the embodiment described above is stored in, for example, the memory 1010 and the hard disk drive 1090 as the program data 1094. Then, the CPU 1020 reads the program module 1093 and the program data 1094 stored in the memory 1010 and the hard disk drive 1090 to the RAM 1012 as necessary, and executes the processing of the embodiment described above.

Note that the program module 1093 and the program data 1094 are not limited to being stored in the hard disk drive 1090, and may be stored in, for example, a removable storage medium and read by the CPU 1020 via the disk drive 1100 or the like. Alternatively, the program module 1093 and the program data 1094 may be stored in another computer connected via a network (e.g., local area network (LAN) and wide area network (WAN)). Then, the program module 1093 and the program data 1094 may be read by the CPU1020 from another computer via the network interface 1070.

### [Comparison with SD-WAN]

There has been known a technique called a software defined-wide area network (SD-WAN). In the technology, software defined networking (SDN) that controls a network with software is applied to a wide area network (WAN). The SD-WAN implements flexible network configuration and traffic control in inter-base connection and cloud connection (reference: Software-Defined Network Service(https://www.ntt.com/business/services/network/vpn/s d-networks.html)).

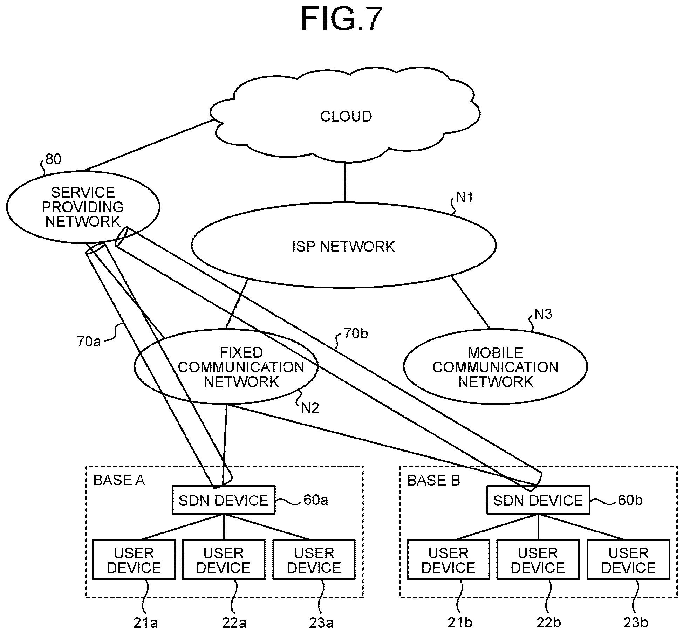

In contrast, the SD-WAN has difficulty in achieving the above-described embodiment. This will be described with reference to FIG. 7. FIG. 7 illustrates a configuration of a network of the SD-WAN.

As illustrated in FIG. 7, when the SD-WAN is implemented, an SDN device is installed in each base. An SDN device 60a is installed in the base A. Furthermore, an SDN device 60b is installed in the base B.

The SDN device 60a and the SDN device 60b are connected to a service providing network 80 via a virtual private network (VPN). The service providing network 80 is used by a service provider to provide connection service for connecting a base with a base or a base with a cloud.

A VPN tunnel 70a is a virtual line constructed on the fixed communication network N2, and connects the SDN device 60a with the service providing network 80. A VPN tunnel 70b is a virtual line constructed on the fixed communication network N2, and connects the SDN device 60b with the service providing network 80. The VPN tunnel 70a and the VPN tunnel 70b implement the VPN.

Furthermore, the SD-WAN may have a breakout function in which a user device is connected to a cloud or the like without the service providing network 80. For example, when the breakout function is used, the SDN device 60a is connected to the cloud via the fixed communication network N2 and the ISP network N1.

Here, the SDN device 60a and the SDN device 60b do not have a function of transmitting packets to both the fixed communication network N2 and the mobile communication network N3. Therefore, the SDN device 60a and the SDN device 60b cannot select one of the fixed communication network N2 and the mobile communication network N3 to cause a user device to perform communication by using the selected communication network.

For example, the SDN device 60a and the SDN device 60a relay communication between the housed user device and the fixed communication network N2, but do not relay communication between the housed user device and the mobile communication network N3.

In the first place, a service provider using the service providing network 80 merely provides connection service via the VPN. Therefore, the congestion situations of the ISP network N1, the fixed communication network N2, and the mobile communication network N3 cannot be acquired from the service providing network 80.

Furthermore, in the above-described embodiment, connection service having a function similar to that of the SD-WAN can be provided by performing software-defined (SD) processing on the ISP network N1. For example, in addition to the VPN and the breakout function, the SD-implemented ISP network N1 (hereinafter, underlay network system) can provide control of network quality using software, provision of a management portal, and a security function using deep packet inspection (DPI) and the like. The control of network quality includes switching of a connection form between a guarantee type and a best effort type, a band change, and the like. Furthermore, the configuration server 30 may be implemented by the underlay network system.

There is no need to use the VPN between each base and the underlay network system. Therefore, the communication control unit 141 transmits a packet transmitted from the user device to the fixed communication network N2 or the mobile communication network N3 without tunneling. Furthermore, the provision unit 332 transmits the setting information to the CPE 10 by transmitting a packet to the fixed communication network N2 or the mobile communication network N3 without tunneling.

The CPE 10 is not required at all to have a function related to the VPN such as tunneling. In this case, the communication control unit 141 transmits the packet transmitted from the user device to the fixed communication network N2 or the mobile communication network N3 while not (never) performing tunneling constantly.

### [Explanation of Reference]

- N1: ISP NETWORK

- N2: FIXED COMMUNICATION NETWORK
- N3: MOBILE COMMUNICATION NETWORK
- 10, 10a, 10b: CPE
- 11: WIRED COMMUNICATION UNIT
- 12: WIRELESS COMMUNICATION UNIT
- 13, 32: STORAGE UNIT
- 14, 33: CONTROL UNIT
- 30: CONFIGURATION SERVER
- 31: COMMUNICATION UNIT
- 131: CONVERSION TABLE
- 132: CONFIGURATION SERVER INFORMATION
- 133: SETTING INFORMATION
- 141: COMMUNICATION CONTROL UNIT
- 142: NOTIFICATION UNIT
- 143: SETTING UNIT
- 321: SETTING INFORMATION DB
- 331: GENERATION UNIT
- 332: PROVISION UNIT

## Claims

1. An information providing device comprising:
a generation unit configured to generate setting information for making a setting for a communication control device installed in a site of a user in accordance with a notification from the communication control device; and
a provision unit configured to transmit the setting information to the communication control device via a first communication network, and, when transmission of the setting information via the first communication network fails, transmit the setting information to the communication control device via a second communication network.

2. The information providing device according to claim 1, wherein the provision unit transmits the setting information to the communication control device via the first communication network, which is a fixed communication network, and, when transmission of the setting information via the first communication network fails, transmits the setting information to the communication control device via the second communication network, which is a mobile communication network.

3. An information providing method to be executed by an information providing device, comprising:
a generation process of generating setting information for making a setting for a communication control device installed in a site of a user in accordance with a notification from the communication control device; and
a provision process of transmitting the setting information to the communication control device via a first communication network, and, when transmission via the first communication network fails, transmitting the setting information to the communication control device via a second communication network.

4. An information providing program that causes a computer to execute:
a generation step of generating setting information for making a setting for a communication control device installed in a site of a user in accordance with a notification from the communication control device; and
a provision step of transmitting the setting information to the communication control device via a first communication network, and, when transmission via the first communication network fails, transmitting the setting information to the communication control device via a second communication network.

5. An information providing system comprising: a communication control device installed in a site of a user; and an information providing device connected to a fixed communication network and a mobile communication network,
wherein the communication control device includes:
a first communication unit configured to relay communication between a user device that is housed and a fixed communication network;
a second communication unit configured to relay communication between the user device and a mobile communication network;
a notification unit configured to notify the information providing device of information for identifying the communication control device; and
a setting unit configured to make a setting for the communication control device by using setting information provided from the information providing device, and
the information providing device includes:
a generation unit configured to generate setting information for making a setting for the communication control device in accordance with a notification from the communication control device; and
a provision unit configured to transmit the setting information to the communication control device via the fixed communication network, and, when transmission of the setting information via the fixed communication network fails, transmit the setting information to the communication control device via the mobile communication network.

6. The information providing system according to claim 5,
wherein the provision unit transmits the setting information to the communication control device by transmitting a packet to the fixed communication network or the mobile communication network without tunneling.
